(19) Europäisches Patentamt
European Patent Office
Office européen des brevets

(11) EP 0 652 461 B1

(12) **EUROPEAN PATENT SPECIFICATION**

(45) Date of publication and mention
of the grant of the patent:
**12.04.2000 Bulletin 2000/15**

(51) Int. Cl.$^7$: **G02F 1/136**, G02F 1/137

(21) Application number: **94308165.3**

(22) Date of filing: **04.11.1994**

(54) **Liquid crystal display**

Flüssigkristallanzeige

Dispositif d'affichage à cristaux liquides

(84) Designated Contracting States:
**CH DE ES FR GB IT LI**

(30) Priority: **08.11.1993 GB 9322948**
**19.10.1994 EP 94307679**

(43) Date of publication of application:
**10.05.1995 Bulletin 1995/19**

(73) Proprietors:
- **VARINTELLIGENT (BVI) LIMITED**
  **Tortola, British Virgin Islands (VG)**
- **JOHNSON, Terence Leslie**
  **London WC2A 1SD (GB)**

(72) Inventors:
- **Liao, York**
  **Kwun Tong, Kowloon (HK)**
- **Kwok, Hoi Sing**
  **Kwun Tong, Kowloon (HK)**

(74) Representative:
**Johnson, Terence Leslie**
**Edward Evans & Co.,**
**Clifford's Inn,**
**Fetter Lane**
**London EC4A 1BX (GB)**

(56) References cited:
**EP-A- 0 350 382          EP-A- 0 463 816**
**EP-A- 0 470 817          EP-A- 0 556 822**
**US-A- 5 003 356**

**Description**

The invention relates to a reflective display device, particularly to such a device based on active matrix control or display of an electro-optic material such as a liquid crystal. The display can be fabricated on integrated circuits based on single crystalline silicon wafers.

Commercial active matrix displays are usually based on light transmission. They are matrix devices where the transmission of light of each individual pixel is controlled by an electrical voltage. These active matrix liquid crystal displays are commonly based on the twisted nematic (TN) effect of liquid crystal for controlling light transmission, and semiconductor thin film transistors (TFT) for controlling the individual pixel's transmission state. The TFT can be made of materials such as polycrystalline silicon, amorphous silicon or cadmium selenide.

The principle of these active matrix display devices is as follows: incoming light is first polarized by passing through a polarizer, and then sent into the liquid crystal cell, which comprises many pixels. When no voltage is applied on the pixel, the polarization vector of the incoming light will be rotated by the liquid crystal molecules through the TN effect. A polarizer placed at the output side of the liquid crystal cell can be used to transmit either the light (normally on) or reject the light (normally off). When a proper voltage is applied to the pixel, the TN effect disappears and the polarization of the light is unchanged. The light will therefore be rejected (off) or transmitted (on) by the output polarizer, depending on whether the device is normally on or off respectively. Each pixel can be turned on or off independently by the active control of the voltage across it. Gray scale can also be achieved by supplying intermediate voltages. All of such active matrix displays are invariably based on glass substrates and function in the transmission mode. Polarizers are placed in the front and back of the liquid crystal panel. Some displays are viewed in reflection by placing a mirror in the back of the liquid crystal panel. But the operation is, however, transmission, not reflection.

The active control of the display matrix is achieved by controlling the electrical signals on the transistors on each pixel. Additionally, driver electronic circuits are required to control the timing and scanning of the electrical pulses to each pixel. While TFTs are adequate for controlling the transmission state of the pixels, they are undesirable for the driver part of the active matrix display. The most important reason is that they are based on thin semiconductor films grown on glass substrates, and require special processing techniques to provide good yield in manufacturing. TFT integrated circuits are also not easily designed using standard very large scale integrated (VLSI) circuit design tools in the sense that the current-voltage characteristics of TFTs are different from those transistors fabricated on single crystalline silicon.

There have been many attempts to replace TFT on glass by high quality transistors and circuits fabricated on single crystalline silicon wafers. Lipton et al described an active matrix liquid crystal display based on crystalline silicon in 1978. Dynamic light scattering from the liquid crystal was used as the display mechanism. When there is no voltage on the pixel, the light is transmitted. When a voltage is applied, the liquid crystal becomes turbid and scatters the incoming light. Unfortunately, this device has poor contrast and light transmission efficiency. Yamasaki et al described a singular crystalline silicon based device where the display is based on the guest-host effect in dye doped liquid crystals. In this display, the absorption coefficient of the dye is dependent on the orientation of the dye molecules. These guest molecules tend to align themselves with the host liquid crystal molecules. Hence the absorption of the guest/host combination can be controlled by an applied voltage.

The concept of dynamic scattering for display was revived recently due to the invention of polymer dispersed liquid crystals. The liquid crystal droplets dispersed in a polymer film can have very high scattering efficiency, and a high contrast ratio between the on (no scattering) and off (scattering) states. It is therefore a potentially important technology for providing active matrix displays on crystalline silicon. In 1990 Drzaic et al described a reflective active matrix liquid crystal display based on such polymer dispersed liquid crystals. However, there are drawbacks for this technology such as the stability of the liquid crystal polymer and the need to use higher voltages to operate such a display. The reason for the latter requirement is simply that the polymer films cannot be made to be the same thickness (a few microns) as the liquid crystal film in an active matrix liquid crystal display. It is the electric field (voltage divided by thickness) that is important in aligning the liquid crystals.

The features of the preamble of claim 1 are in combination known from EPA-463 816.

According to a first aspect of the invention there is provided an electro-optic apparatus for image display, comprising a tunable birefringent display cell, including a material (i) having a positive or negative birefringence the phase retardation of which can be described with an ordinary index of refraction and a voltage dependent extraordinary index of refraction; said display cell comprising

an active matrix controllable display element, including reflector means (d) for causing incident electromagnetic energy to traverse across the cell a plurality of times; and
polarising means (i) being oriented relative to said display cell for polarising light incident on said display cell and receiving light reflected by said reflector means (d);

characterised by voltage control means arranged such that both on and off-states and any brightness between said on and off- states of each pixel require a non zero driving voltage at which the extraordinary index of refraction varies with voltage.

It is preferred that the apparatus is adapted to be operable in a non-birefringent state by application of a voltage to the cell.

The means may provide for traversal of the cell twice. This is an efficient use of incident light, particularly when the means may comprise a metal electrode reflector means, for example comprising aluminium. This is a relatively inexpensive, yet efficient material.

The cell may comprise a silicon chip, suitably a single crystalline silicon cell.

According to a second aspect of the invention there is provided an activated liquid crystal display device including apparatus as hereinbefore defined.

The device may comprise a plurality of polarizers each adapted to produce a plurality of linearly polarized beams of incident light at a plurality of wavelengths.

There may be a polarizer adapted to produce a linearly polarized beam of incident light; suitably the polarizer may comprise a prism or prisms, particularly two prisms which form a cube.

Alternatively, the polarizer may comprise a sheet or thin film polarizer.

There may be means to provide a colour display, particularly comprising a colour filter or filters.

There may be a polymer coating for aligning the liquid crystal molecules.

The device may comprise one or a plurality of crystalline silicon based liquid cells. This is a relatively readily manufactured device.

There may be an earth (ground) which may comprise a glass plate with a transparent conductive coating; suitably an indium tin oxide coating.

The display device may include a light source.

The invention extends, it will be understood, to an instrument including an active matrix display device as hereinbefore defined.

In the invention, therefore, use is made of the linear electro-optic effect to provide the display. In a preferred embodiment crystalline silicon is used as the substrate to grow all the controlling transistors for the pixels as well as the driver circuits. This display can work with any electro-optic material which has a voltage dependent birefringence. Liquid crystal has large electric field dependent birefringence. In the invention, the liquid crystals are not aligned as in ordinary TN mode displays. Instead, the molecules are aligned to be substantially exactly parallel throughout the entire display area. In this way, the liquid crystal cell behaves as a birefringent linear electro-optic device. The operation of this display is based on the differential phase retardation of two perpendicular polarization directions of the incoming light beam. If the incoming light beam is linearly polarized such that the electric field vector is at 45 degrees to the fast (extraordinary) and slow (ordinary) axes of the liquid crystal cell, then the outgoing beam will have a differential phase retardation between these two fast and slow axes. It can be shown that for a linear electro-optic device, the phase retardation between the fast and slow components can be given by

$$Q = 2\Pi \, (ne(v) - no) \, d/\lambda$$

where $ne(V)$ is the voltage dependent extraordinary refractive index and $no$ is the ordinary refractive index of the liquid crystal, $d$ is the liquid crystal cell thickness and $\lambda$ is the light wavelength. Therefore, by controlling the birefringence of the liquid crystal through an applied voltage, the polarization of the outgoing light beam can be manipulated to provide the on/off states, together with many grey scales. For example, a voltage (which may be zero, but not according to the claimed invention) that gives a 90 degree (or 270 degrees etc) differential phase retardation upon one pass through the cell will mean that the polarization vector will be rotated 90 degrees upon reflection from the liquid crystal cell. This light beam can be transmitted by a cross polarizer. This is the on state of the liquid crystal cell/pixel. When a voltage gives a 180 degree (or 360 degrees etc) differential phase retardation, the polarization of the reflected beam will not change, and the cross polarizer will block its further transmission. This is the off state for the pixel. Any transmission value through the entire system can be obtained by proper choices of the birefringence through controlling the voltage across pixel.

This reflective liquid crystal display is therefore based on the linear electrooptic effect. It is called reflective because light passes through the liquid crystal cell a plurality of times, suitably twice, upon reflection from one side of the liquid crystal cell. This has to be the case because crystalline silicon is used as the substrate. Transmission through the silicon wafer is impossible, unlike glass based active matrix liquid crystal displays. However, there are transmission optical elements in this system such as the polarizers and lenses. The use of crystalline silicon substrate is now clear. The transistors for controlling and holding the voltages of each individual pixel can be high quality metal-oxide semiconductor (MOS) transistors fabricated on a silicon chip. Moreover, the driver electronics can be fabricated on the same silicon chip using microfabrication technology. The design of these circuits is also compatible with conventional VLSI circuit rules and tools. The pixel can also be made quite small so that the size of the entire chip, including the display matrix and the driver electronics can be quite small with high resolution. This display can be viewed either directly or by projection onto a screen. Depending on the driver circuit, this display can be used to display different kinds of image information.

For example, it can be used to display television pictures, it can be used as a computer terminal, or any other type of video display.

Because the display is based on the linear electro-optic effect, besides liquid crystals, other types of electro-optic material can also be used. Liquid crystal is mentioned here only as a convenient embodiment of the invention. Examples of other electro-optic materials that can be used include, but not limited to, lead lanthanum zirconium titanate (PLZT), barium titanate (BaTi03) and many other transparent metal oxides.

An active matrix display embodying the invention is hereinafter described, by way of example, with reference to the accompanying drawings.

Fig. 1 is a schematic diagram of an active matrix display showing an MOS transistor and a metal electrode, according to the invention;

Fig. 2 is a cross sectional view of a pixel showing the various layers of materials;

Fig. 3 is a preferred embodiment of the optical arrangement;

Fig. 4 is a variation of the preferred embodiment in Fig. 3; and

Fig. 5 is a variation of the preferred embodiment in Fig. 3.

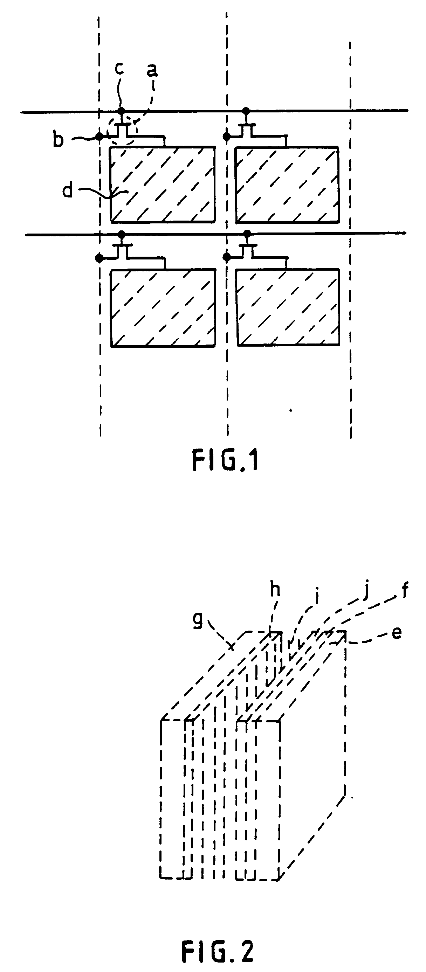

Referring to the drawings, there is shown an electro-optic apparatus such as a liquid crystal cell for image display, comprising a tunable birefringent display and a control element operable in a reflective mode whereby to traverse incident light across the cell a plurality of times, two in the embodiment. As schematically shown in Fig.1, an entire display consists of a N by M array of pixels, where N, M are numbers compatible with standard display resolution for both computer terminals and televisions. The pixels are in the embodiment fabricated on a single crystalline silicon wafer using microelectronics technology. Each pixel forms apparatus for image display and has a MOS transistor 'a' as shown for controlling the voltage across the liquid crystal cell. The source 'b' of the MOS transistor is pulsed electrically, the voltage of which determines the voltage across a liquid crystal cell for that pixel. The gate 'c' of the MOS (metal oxide semi-conductor) transistor is also driven by electrical pulses that turns the transistor on or off. The gate and source pulses are sequenced so that the display is scanned row by row. A metal pad 'd' which is slightly smaller than the pixel size and connected to the drain of the MOS transistor acts as an electrode of the liquid crystal pixel. This metal can be aluminium or any other metal compatible with microfabrication process and other materials. The liquid crystal between this metal pad 'd' and the ground plane forms the unit of display (pixel). As shown in Fig. 2, the ground (earth) plane, consists of a piece of glass 'e' with a transparent conductive coating 'f', such as indium tin oxide (ITO). A silicon wafer 'g' with the integrated circuits fabricated on it has a coating of polymer 'h' for aligning the liquid crystal molecules 'i'. The ITO coated glass also has a polymer coating 'j' for aligning the liquid crystal molecules. In the embodiment, buffing of the aligning polymer is such that the liquid crystal molecules are all aligned parallel to each other when no voltage is applied to the cell. This linear alignment is schematically indicated in Fig. 2.

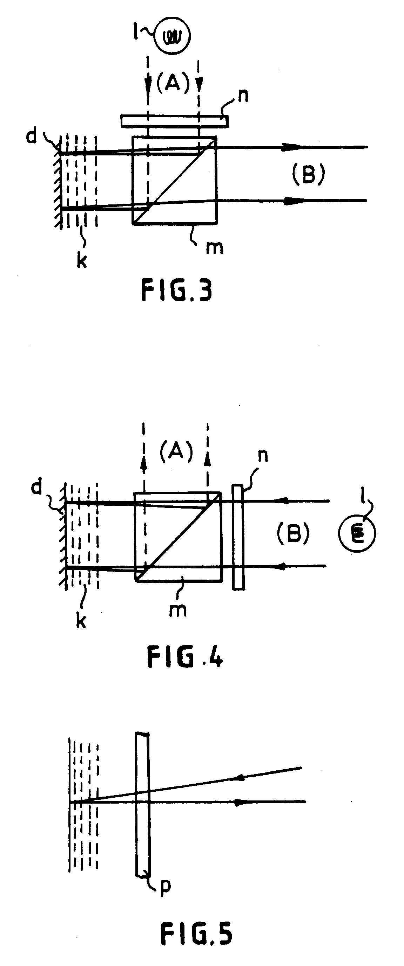

Fig. 3 shows the light path for a typical preferred embodiment crystal display device according to the invention. It shows a single crystalline silicon based liquid crystal cell 'k'. The metal pad 'd' behaves as a mirror for the light. The light source 'l' can be halogen lamp (or any other bright light source). In the embodiment, the light source is polarized linearly by reflecting off a cube prism polarizer 'm' and shines on the liquid crystal display perpendicularly. The polarization of the light is such that it makes a 45 degree angle with the alignment direction of the liquid crystal molecules. Upon reflection from the metal pad 'd', the light is allowed to go into the same cube polarizer 'm'. If no change is made to the polarization state of the light, the light will be reflected by the polarizer and goes back towards the light source in the path (A). If the polarization of the light is rotated 90 degrees, it will pass through the polarizer and enter path (B). Path (B) is the viewing direction for the display. This light can then be viewed directly, or can be projected onto a screen by a suitable light projection mechanism (which is not shown).

A colour filter 'n' may be necessary for a broadband light source. Alternatively, the colour filter can be incorporated into the liquid crystal cell by coating techniques. For output requiring colours, multiplexing of red, green and blue pixels on the same display, or the use of three separate displays may be required.

It will be appreciated that many variations of the embodiment shown in Fig. 3 are possible. Thus Figs. 4 and 5 show possible arrangements of optical layout to achieve the display function.

Fig. 4 is basically similar to the embodiment in Fig.3.

Fig. 5 shows an embodiment where ambient light can be used. It requires a thin film polarizer sheet 'p' positioned on the liquid crystal cell. In this case, the input and output light beams to the liquid crystal cell should have the same polarization in the on state. Embodiments in Fig. 3 and 4 are suitable for projection displays while Fig. 5 is more suitable for direct viewing under ambient lighting.

It will be understood that using the invention, polarisation of the light is manipulated to produce a displaying effect. The intensity of the light is changed to provide the display effect. The light polarizers are an integral part of the apparatus. Therefore, in order to achieve this, both the 'on' and 'off' state of the individual pixels require a non-zero driving voltage. Stated in another way the invention requires a voltage control all the time for both 'on' and 'off' states. Thus the invention can work well with positive and negative birefringences.

In all embodiments, alignment layers of the liquid crystal molecules are anti-parallel rubbed so that the liquid crystal molecules are substantially parallel to the cell wall at zero voltage. When the voltage is applied (all the time) the liquid molecules tilt in the same direction.

Thus, using the devices described herein with reference to the drawings, it is possible to provide:-

1. An active matrix liquid crystal display device based on voltage control of the birefringence of the liquid crystal cell with transistors controlling the on/off state of the individual pixels. The polarization state of the light going through the device can be modified by an applied voltage to the individual pixels. The display device is capable of being fabricated on single crystalline silicon wafers which may have on it all the transistors for the active control of the individual pixels, together with all the driver circuits and integrated circuits for voltage control, scanning and timing, all on a single silicon chip. Each pixel of the active matrix display contains a reflective metal electrode fabricated on the silicon substrate. The display is based on light reflection and the light has to traverse the liquid crystal cell twice due to reflection from metal electrodes on each pixel.

2. That the linear electro-optic material can be used for this display. In particular, liquid crystals can be used.

3. That the displayed image can be viewed directly, or projected onto a screen for large area displays.

4. That external optics can be used to form the input light beam when a light source is sued for projection display. Ambient light can be used for viewing the display directly.

5. That a cube prism polarizer is used to produce a linearly polarized light beam into the display device, and also to select the properly polarized output beam for display.

6. That a sheet polarizer can also be used to obtain the display.

7. That the said display is fabricated on a crystalline silicon wafer. The wafer is arranged to have a matrix of pixels, each one of which can be turned on (bright) or off (dark), or any brightness in between.

8. That the display can be in any colour.

9. That three of such displays in red, green and blue can be used in combination to provide multi-colour images.

10. That the pixels of the display can have an arrangement of colours so that multi-colour image can be obtained in one display device.

**Claims**

1. An electro-optic apparatus for image display, comprising a tunable birefringent display cell, including a material (i) having a positive or negative birefringence the phase retardation of which can be described with an ordinary index of refraction and a voltage dependent extraordinary index of refraction; said display cell comprising

an active matrix controllable display element, including reflector means (d) for causing incident electromagnetic energy to traverse across the cell a plurality of times; polarising means (i) being oriented relative to said display cell for polarising light incident on said display cell and receiving light reflected by said reflector means (d); and voltage control means being arranged such that an off-state or any brightness in between an on-state and said off-state of each pixel require a non zero driving voltage at which the extraordinary index of refraction varies with voltage characterised in that said voltage control means are arranged to apply a non zero driving voltage to each pixel in said on state.

2. Apparatus according to Claim 1, being operable in a non-birefringent state by application of voltage to the cell.

3. Apparatus according to Claim 1 or Claim 2, comprising a liquid crystal display.

4. Apparatus according to any preceding claim, wherein said reflector means providing for traversal of the cell twice by incident light energy.

5. Apparatus according to Claim 4, wherein said reflector means comprising a metal electrode reflector means (d).

6. Apparatus according to Claim 5, wherein the metal electrode reflector means (d) comprising aluminium.

7. Apparatus according to Claim 6, wherein the panels being carried by a silicon chip.

8. An active matrix liquid crystal display device comprising an apparatus according to any preceding claim.

9. A display device according to Claim 8, further comprising a polarizer (m, p) adapted to produce a linearly polarized beam of incident light.

10. A display device according to Claim 9, comprising a plurality of polarizers each adapted to produce a plurality of linearly polarised beams of incident light at a plurality of wavelengths.

11. A display device according to Claim 9 or Claim 10, wherein the polarizer(s) comprising a prism or prisms (m).

12. A display device according to Claim 11, wherein the polarizer(s) comprising two prisms to form a cube (m).

13. A display device according to Claim 9, wherein the polarizer comprising a sheet or thin film polarizer (p).

14. A display device according to any of Claims 8 to 13, further comprising means to provide a colour display.

15. A display device according to Claim 14, wherein the colour means comprising one or more colour filter or filters.

16. A display device according to any of Claims 8 to 15, comprising a coating (j) for aligning the liquid crystal molecules.

17. A display device according to any of Claims 8 to 16, comprising one or a plurality of crystalline silicon based liquid cells.

18. A display device according to any of Claims 8 to 17, including an earth plate (e) comprising a glass plate with a transparent conductive coating (f).

19. A display device according to Claim 18, wherein the conductive coating comprising an indium tin oxide coating.

20. An apparatus according to any of Claims 1 to 7 or a display device according to any of Claims 8 to 19, comprising a light source (l).

21. An instrument, comprising an active matrix display device according to any of Claims 7 to 19.

22. Apparatus according to any preceding claims 1 to 7, wherein the driving voltage of said voltage control means is defined as a first driving voltage and a second driving voltage, said first driving voltage being greater than said second driving voltage, and said on state being associated with one of said first driving voltage and said second driving voltage and said off state being associated with one of said second driving voltage and said first driving voltage, respectively.

**Patentansprüche**

1. Elektrooptische Vorrichtung zur Bildanzeige, aufweisend eine abstimmbare doppelbrechende Anzeigezelle mit einem Material (i), das positive oder negative Doppelbrechung aufweist, dessen Phasenverzögerung mit einem gewöhnlichen Brechungsindex und einem spannungsabhängigen außerordentlichen Brechungsindex beschrieben werden kann, wobei die Anzeigezelle aufweist:

Ein steuerbares Aktivmatrixanzeigeelement mit einem Reflektormittel (d), um die elektromagnetische Energie zu veranlassen, die Zelle mehrmals zu durchlaufen; und Polarisationsmittel (i), die relativ zu der Anzeigezelle orientiert sind, um auf der Anzeigezelle einfallendes Licht zu polarisieren und durch die Reflektormittel (d) reflektiertes Licht zu empfangen; gekennzeichnet durch Spannungssteuermittel, die dazu ausgelegt sind, daß sowohl Ein- wie Aus-Zustände und jegliche Helligkeit zwischen diesen Ein- und Aus-Zuständen für jedes Pixel eine von null unterschiedliche Treiberspannung erfordern, bei welcher der außerordentliche Brechungsindex sich mit der Spannung ändert.

2. Vorrichtung nach Anspruch 1 zum Betrieb in einem nichtdoppelbrechenden Zustand durch Anlegen einer Spannung an die Zelle.

3. Vorrichtung nach Anspruch 1 oder 2, aufweisend eine Flüssigkristallanzeige.

4. Vorrichtung nach einem der vorangehenden Ansprüche, wobei die Reflektormittel einen doppelten Lauf von einfallender Lichtenergie durch die Zelle bereitstellen.

5. Vorrichtung nach Anspruch 4, wobei die Reflektormittel ein Metallelektrodenreflektormittel (d) umfassen.

6. Vorrichtung nach Anspruch 5, wobei das Metallelektrodenreflektormittel (d) Aluminium umfaßt.

7. Vorrichtung nach Anspruch 6, wobei die Platten durch einen Silicium-Chip getragen sind.

**8.** Aktivmatrixflüssigkristallanzeigevorrichtung mit einer Vorrichtung in Übereinstimmung mit einem vorangehenden Anspruch.

**9.** Anzeigevorrichtung nach Anspruch 8, außerdem aufweisend einen Polarisator (m, p), der dazu ausgelegt ist, einen linearpolarisierten einfallenden Lichtstrahl zu erzeugen.

**10.** Anzeigevorrichtung nach Anspruch 9, aufweisend mehrere Polarisatoren, von denen jeder geeignet ist, mehrere linearpolarisierte einfallende Lichtstrahlen mit mehreren Wellenlängen zu erzeugen.

**11.** Anzeigevorrichtung nach Anspruch 9 oder 10, wobei der Polarisator bzw. die Polarisatoren ein Prisma bzw. Prismen (m) umfaßt bzw. umfassen.

**12.** Anzeigevorrichtung nach Anspruch 11, wobei der Polarisator bzw. die Polarisatoren zwei Prismen zur Bildung eines Würfels (m) umfaßt bzw. umfassen.

**13.** Anzeigevorrichtung nach Anspruch 9, wobei der Polarisator einen Folien- oder Dünnschichtpolarisator (p) umfaßt.

**14.** Anzeigevorrichtung nach einem der Ansprüche 8 bis 13, außerdem aufweisend Mittel zum Bereitstellen einer Farbanzeige.

**15.** Anzeigevorrichtung nach Anspruch 14, wobei die Farbanzeige zumindest einen oder mehrere Farbfilter aufweisen.

**16.** Anzeigevorrichtung nach einem der Ansprüche 8 bis 15, aufweisend eine Beschichtung (j) zum Ausrichten der Flüssigkristallmoleküle.

**17.** Anzeigevorrichtung nach einem der Ansprüche 8 bis 16, aufweisend eine oder mehrere auf kristallinem Silicium basierende Flüssigkristallzelle(n).

**18.** Anzeigevorrichtung nach einem der Ansprüche 8 bis 17, aufweisend eine Erdplatte bzw. Erdplatten, umfassend eine Glasplatte mit einer transparenten elektrisch-leitenden Beschichtung (f).

**19.** Anzeigevorrichtung nach Anspruch 18, wobei die elektrischleitende Beschichtung eine Indiumzinnoxid-Beschichtung umfaßt.

**20.** Vorrichtung nach einem der Ansprüche 1 bis 7 bzw. Anzeigevorrichtung nach einem der Ansprüche 8 bis 19, aufweisend eine Lichtquelle (l).

**21.** Instrument mit einer Aktivmatrixanzeigevorrichtung nach einem der Ansprüche 7 bis 19.

**22.** Vorrichtung nach einem der vorangehenden Ansprüche 1 bis 7, wobei die Treiberspannung für die Spannungssteuermittel als erste Treiberspannung und zweite Treiberspannung festgelegt ist, wobei die erste Treiberspannung größer als die zweite Treiberspannung ist, und wobei ein Ein-Zustand entweder der ersten Treiberspannung oder der zweiten Treiberspannung zugeordnet ist, und wobei ein Aus-Zustand entweder der zweiten Treiberspannung oder der ersten Treiberspannung zugeordnet ist.

**Revendications**

**1.** Appareil électro-optique permettant d'afficher des images, comprenant une cellule d'affichage biréfringente accordable, incluant un matériel (i) ayant une biréfringence positive ou négative dont le retard de phase peut être décrit avec un indice ordinaire de réfraction et un indice extraordinaire de réfraction dépendant de la tension ; ladite cellule d'affichage comprenant

un élément d'affichage par points actif contrôlable, comprenant un moyen formant réflecteur (d) permettant à l'énergie électromagnétique incidente de traverser la cellule une pluralité de fois ; et

un moyen de polarisation (i) orienté par rapport à ladite cellule d'affichage afin de polariser la lumière incidente sur ladite cellule d'affichage et de recevoir la lumière réfléchie par ledit moyen formant réflecteur (d) ;
caractérisé par un moyen de commande de tension placé de telle manière que les états passant et non passant et que la luminosité entre lesdits états passant et non passant de chaque pixel exigent une tension de commande non nulle à laquelle l'indice extraordinaire de réfraction varie en fonction de la tension.

**2.** Appareil selon la revendication 1, pouvant fonctionner dans un état non biréfringent par application d'une tension sur la cellule.

**3.** Appareil selon la revendication 1 ou 2, comprenant un affichage à cristaux liquides.

**4.** Appareil selon l'une quelconque des revendications précédentes, dans lequel ledit moyen formant réflecteur fournit deux fois la traversée de la cellule par l'énergie lumineuse incidente.

**5.** Appareil selon la revendication 4, dans lequel ledit moyen formant réflecteur comprend un moyen formant réflecteur à électrode métallique (d).

**6.** Appareil selon la revendication 5, dans lequel ledit moyen formant réflecteur à électrode métallique (d) comprend de l'aluminium.

**7.** Appareil selon la revendication 6, dans lequel les panneaux sont supportés par une puce de silicium.

**8.** Dispositif d'affichage à cristaux liquides par points actif comprenant un appareil selon l'une quelconque des revendications précédentes.

**9.** Dispositif d'affichage selon la revendication 8, comprenant en outre un polariseur (m, p) adapté pour produire un faisceau de lumière incidente polarisé de manière linéaire.

**10.** Dispositif d'affichage selon la revendication 9, comprenant une pluralité de polariseurs, chacun étant adapté pour produire une pluralité de faisceaux de lumière incidente polarisés de manière linéaire à une pluralité de longueurs d'onde.

**11.** Dispositif d'affichage selon la revendication 9 ou 10, dans lequel le ou les polariseurs comprennent un ou plusieurs prismes (m).

**12.** Dispositif d'affichage selon la revendication 11, dans lequel le ou les polariseurs comprennent deux prismes de façon à former un cube (m).

**13.** Dispositif d'affichage selon la revendication 9, dans lequel le polariseur comprend un polariseur à feuille ou à couche mince (p).

**14.** Dispositif d'affichage selon l'une quelconque des revendications 8 à 13, comprenant en outre un moyen pour fournir un affichage couleur.

**15.** Dispositif d'affichage selon la revendication 14, dans lequel le moyen couleur comprend un ou plusieurs filtres colorés.

**16.** Dispositif d'affichage selon l'une quelconque des revendications 8 à 15, comprenant un revêtement (j) afin d'aligner les molécules de cristaux liquides.

**17.** Dispositif d'affichage selon l'une quelconque des revendications 8 à 16, comprenant une cellule liquide à base de silicium cristallin ou une pluralité de cellules liquides à base de silicium cristallin.

**18.** Dispositif d'affichage selon l'une quelconque des revendications 8 à 17, comprenant une plaque de masse (e) comprenant une plaque de verre avec un revêtement conducteur transparent (f).

**19.** Dispositif d'affichage selon la revendication 18, dans lequel le revêtement conducteur comprend un revêtement à l'oxyde d'étain dopé à l'indium.

**20.** Appareil selon l'une quelconque des revendications 1 à 7 ou dispositif d'affichage selon l'une quelconque des revendications 8 à 19, comprenant une source lumineuse (l).

**21.** Instrument comprenant un dispositif d'affichage par points actif selon l'une quelconque des revendications 7 à 19.

**22.** Appareil selon l'une quelconque des revendications 1 à 7, dans lequel la tension de commande dudit moyen de commande de tension est définie comme une première tension de commande et une deuxième tension de commande, ladite première tension de commande étant supérieure à ladite deuxième tension de commande, et ledit état passant étant associé à l'une de ladite première tension de commande et de ladite deuxième tension de commande et l'état non passant étant associé à l'une de ladite deuxième tension de commande et de ladite première tension de commande, respectivement.

EP 0 652 461 B1

FIG.1

FIG.2

**FIG.3**

**FIG.4**

**FIG.5**